# EUROPEAN PATENT SPECIFICATION

(11) **EP 1 997 712 B1**
(45) Date of publication and mention of the grant of the patent: **23.12.2009**
(21) Application number: 08163455.2
(22) Date of filing: 25.02.2003
(51) Int. Cl.: B62D 1/04

(54) **Steering equipment for vehicles**
Lenkausstattung für ein Fahrzeug
Equipement pour direction de véhicule

(30) Priority: 04.03.2002 IT BO20020106
(43) Date of publication of application: 03.12.2008
(62) Divisional of application: 03100450.0
(73) Proprietor: CNH Italia S.p.A., 41100 Modena (IT)
(72) Inventor: Ferracin, Paolo, 41030, San Prospero Sul Secchia (Modena) (IT); Mongiardo, Marcello, 41100, Modena (IT); Mazzucchi, Franco, 41050, Ciano nel Frignano (Modena) (IT); Scotti, Allessandro, 41100, Modena (IT)
(74) Representative: CNH IP Department

(56) References cited:
- EP-A- 1 142 773
- DE-A- 19 625 966
- DE-C- 946 870
- DE-U- 20 004 953

## Description

The present invention relates to steering equipment for vehicles, and more particularly, although not exclusively, to steering equipment for agricultural vehicles, such as tractors, combine harvesters and forage harvesters.

In an agricultural vehicle it is known to use steering equipment of the type comprising a steering unit, which in turn comprises a steering column having a given longitudinal axis, a transmission shaft mounted inside the steering column for rotating about the aforesaid axis and a steering wheel mounted on the transmission shaft. Additionally, a control device for actuating an operating unit may be provided. The control device may be operable e.g. to induce conversion between "conventional steering mode" and "fast steering mode" as described in EP-A-1.142.773.

Generally, when mounted onto the steering column, the control device comprises the following components: a reference member which can move along the aforesaid axis; actuator means which can be operated by an operator for displacing the reference member along the axis; sensor means, designed to detect a position of the reference member along said axis; and connecting means, of a mechanical or electrical type, for connecting the sensor means to the reference member.

The steering unit is designed to control the steering of a pair of wheels of the vehicle by means of a hydraulic steering circuit. The circuit enables the steering wheel to rotate about the aforesaid axis even when the wheels have reached their maximum steering angle. As such, the steering wheel may continue to make an indefinite number of complete rotations even after full steering lock has been reached.

The same problem can occur with the embodiment of DE 200 04 953. This document discloses a steering wheel for a motor vehicle that includes at least one switching device for actuating an electric functional group such as, for example, a vehicle horn. The switching device includes two electric contact elements that can be moved in relation to one another and can be brought into contact with one another for actuating the functional group.

As a result of this unrestricted movement of the steering wheel, steering equipment of the above type presents the serious drawback that actuator means for another function (such as the "fast steering mode") cannot be readily affixed to the steering wheel for rotation therewith, since otherwise the connection means between the sensor and the reference member would become damaged. Instead, the actuator means must be connected in a slidable manner to the steering column underneath the steering wheel. This poses the additional problem of finding an ergonomic position, which is not hidden by the steering wheel.

The drawbacks described above are partially overcome by mounting the actuator means on the dashboard of the vehicle, separate from the steering column. In this case, however, to operate the actuator means, the operator must let go of the steering wheel with at least one hand, which again is not recommendable from an ergonomic point of view.

The purpose of the present invention is to provide steering equipment for vehicles which is free from the drawbacks referred to above.

According to the present invention, steering equipment is provided for vehicles, as claimed in Claim 1.

The present invention will now be described further, by way of example, with reference to the accompanying drawings, in which:
Figure 1 is a schematic perspective view of a preferred embodiment of the steering equipment of the present invention;
Figures 2 and 3 are longitudinal sectional views of the equipment of Figure 1, illustrated in two different operative positions;
Figure 4 is a schematic perspective view, with parts in cross-sectional view, of a further embodiment of the steering equipment of the present invention; and
Figures 5 and 6 are longitudinal sectional views of the equipment of Figure 4, illustrated in two different operative positions.

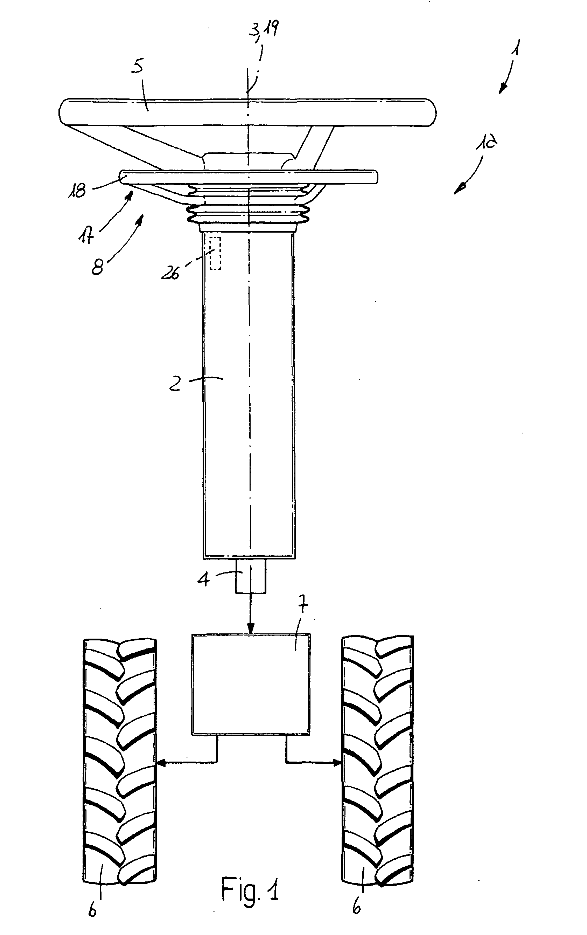

With reference to Figure 1, the reference number 1 designates, as a whole, steering equipment for vehicles, in particular for agricultural vehicles. Said equipment comprises a steering unit 1a, which in turn includes a tubular steering column 2 extending along an axis 3 and connected in known manner to the body (not illustrated) of the vehicle. A tubular transmission shaft 4 is mounted inside the steering column 2 co-axially with respect to the axis 3, and a steering wheel 5 is fitted on one end of the shaft 4 for controlling the steering of a pair of wheels 6 by means of a hydraulic unit 7 of the type described in the patent application No. EP-A-1.142.773, which is integrally incorporated herein by reference.

The steering unit 1a comprises a control device 8 acting upon the hydraulic unit 7 for varying a steering ratio, i.e. the ratio between the angle of rotation of the steering wheel 5 about the axis 3 and the angle of steering of the wheels 6, between a first relatively large value k1, which is characteristic of a first mode of operation, defined as "conventional steering", and a second relatively small value k2, which is characteristic of a second mode of operation, defined as "fast steering".

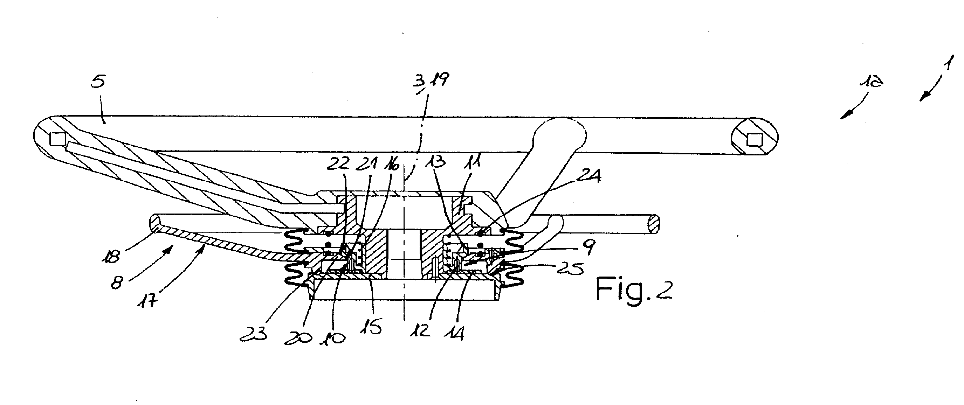

With reference to Figure 2, the device 8 comprises a reference member 9, which in turn includes a sleeve 10, which is set coaxial to the axis 3. The sleeve 10 is associated with a central hub 11 of the steering wheel 5 in such a way that it can turn and slide axially. It has a restricted bottom portion 12 and a widened top portion 13, and a metal annular cup 14 fixed to one end of the portion 12 orthogonal to the axis 3.

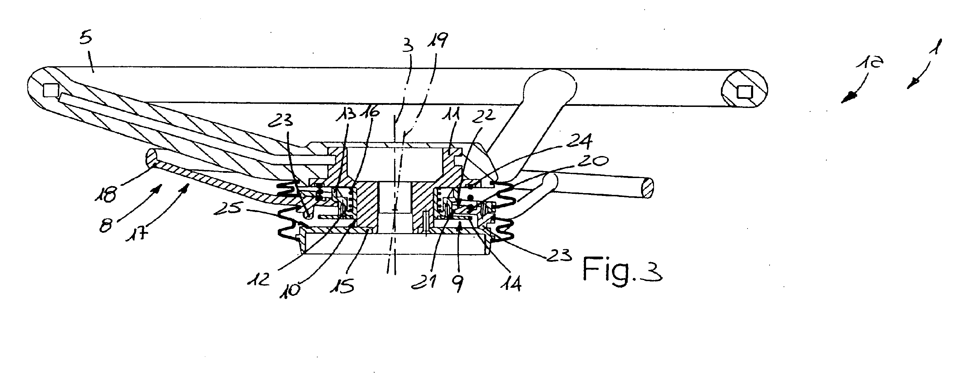

The member 9 is normally kept in a lowered position (Figure 2), in which the cup 14 is set in contact with an annular flange 15. The flange 15 extends radially outwards from an external surface of the hub 11 and is made of a non-ferromagnetic material (for example, plastic). The cup 14 is urged in contact with the flange 15 by means of a spring 16 set between the sleeve 10 and the hub 11 co-axially with respect to the axis 3. The member 9 can move along the axis 3, under the thrust of a control or actuating member 17 and against the thrust of the spring 16, from the aforesaid lowered position (Figure 2) to a raised position (Figure 3), in which the cup 14 is set at a given distance from the annular flange 15.

The member 17 comprises an actuator wheel 18, which has a longitudinal axis 19 and is set inside the steering wheel 5. The wheel 18 is provided with a central hub 20, which extends about the hub 11 co-axially with respect to the axis 19, and has a restricted bottom portion 21 engaged by the restricted bottom portion 12 of the hub 11 and a widened top portion 22 substantially having the shape of a truncated cone, engaged by the widened top portion 13 of the hub 11.

The hub 20 is moreover provided with a plurality of pin elements 23, which are uniformly distributed about the axis 19. The elements 23 project axially downwards from the hub 20 and normally engage, under the thrust of a spring 24 provided between the hubs 11 and 20, corresponding seats 25 made into the top surface of the flange 15.

The actuator wheel 18 is able to move, against the thrust of the spring 24 and under a thrust that is asymmetrical with respect to the axis 3 and is exerted by the operator with just one hand, from a resting position (Figure 2), in which the steering wheel 5 and actuator wheel 18 are coaxial with respect to one another and to the axes 3 and 19, to an operative position (Figure 3), in which the axes 3 and 19 form with respect to one another an angle other than 0°.

With reference to Figure 3, when the wheel 18 is moved by the operator into its operative position against the thrust of the spring 24, the portion 22 of the hub 20 co-operates with the portion 13 of the sleeve 10 for displacing the cup 14 into its raised position against the thrust of the spring 16. With reference to Figure 2, when the actuator wheel 18 is released by the operator, the wheel 18 is displaced into its resting position under the thrust of the spring 24, and the cup 14 is set in its lowered position under the thrust of the spring 16.

The device 8 further comprises a magnetic proximity sensor 26 (Figure 1), which is fixed to the steering column 2 and is designed to detect the displacement of the cup 14 along the axis 3 between its lowered position and raised position. An electronic control unit (not illustrated) is designed to control operation of the hydraulic unit 7 in response to a signal coming from the proximity sensor 26, to selectively choose between "conventional steering" and "fast steering".

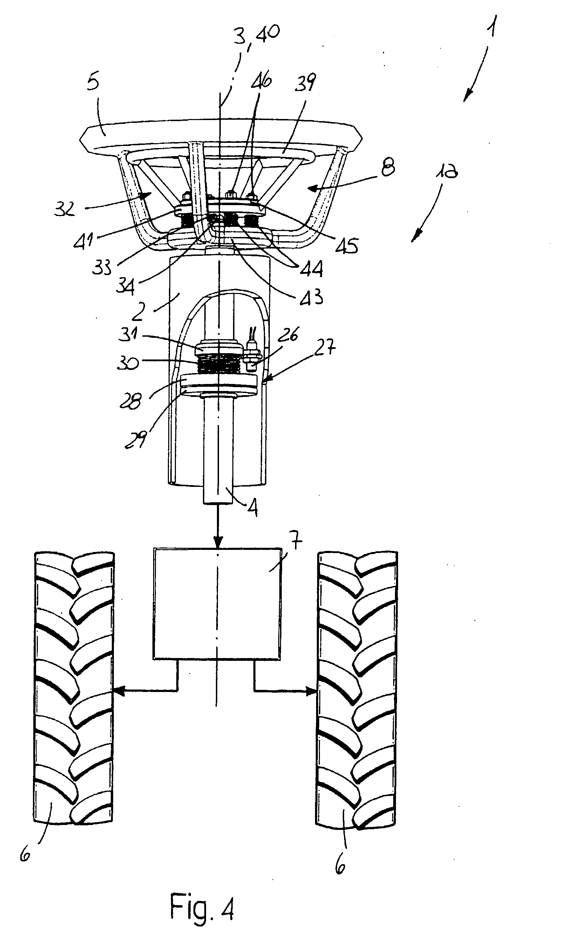

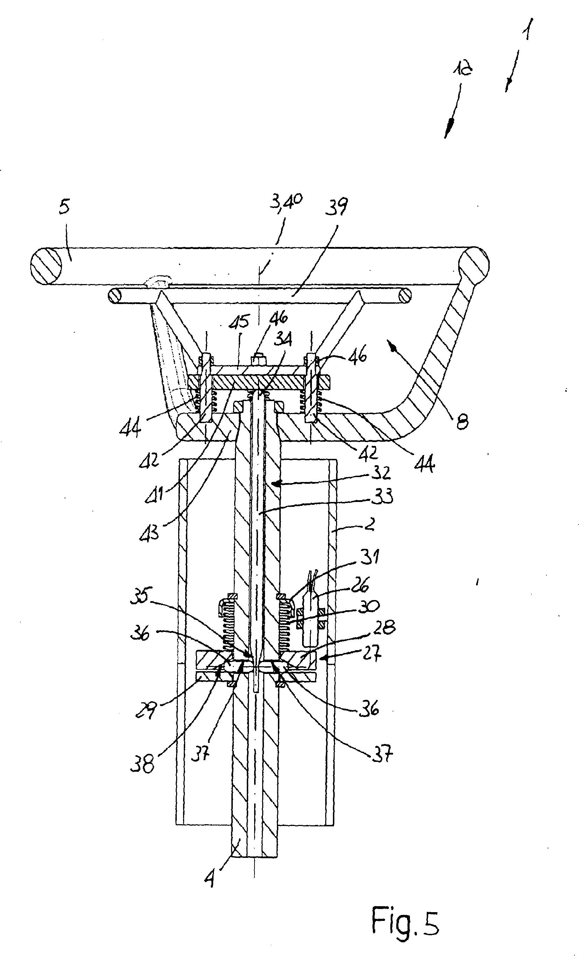

The variant illustrated in Figures 4, 5 and 6 differs from what is illustrated in the previous figures in that the control device 8 comprises a reference member 27, which in turn comprises a flat annular cup 28. The cup 28 is set coaxial to the axis 3, and is connected in such a way that it can turn and slide axially with respect to the shaft 4. The cup 28 is normally kept in a lowered position (Figure 5) by a spring 30. In the lowered position, the cup 28 is set in contact with an annular flange 29 which extends radially outwards from an external surface of the shaft 4. The spring 30 is provided between the cup 28 and a collar 31 fixed to the external surface of the shaft 4 co-axially with respect to the axis 3.

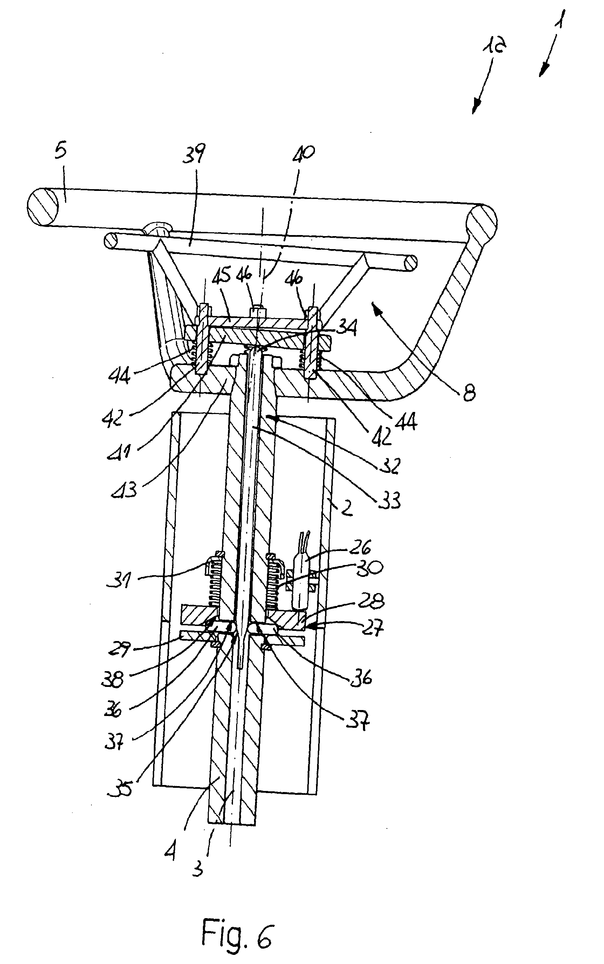

The cup 28 is able to move along the axis 3, under the thrust of an actuator device 32 and against the thrust of the spring 30, from the aforesaid lowered position (Figure 5) to a raised position (Figure 6), in which the cup 28 is set at a given distance from the annular flange 29.

The device 32 comprises a rod 33, which is slidably mounted inside the shaft 4 co-axially with respect to the axis 3 and has a top end 34 projecting outwards from the shaft 4. The rod 33 is provided with a bottom portion 35 with an end substantially shaped like a truncated cone, designed to engage a plurality of pin elements 36. These elements 36 extend orthogonal to the axis 3, and are slidably mounted within respective holes 37 made through the shaft 4 so as to engage a seat 38, which substantially has the shape of a truncated cone and is made radially in the cup 28.

The device 32 further comprises an actuating wheel 39, which has a longitudinal axis 40, is set inside the steering wheel 5, and is provided with a central plate 41 coaxial to the axis 40. The central plate 41 is slidably connected to a plurality of pins 42, which extend upwards from a central hub 43 of the steering wheel 5, and are uniformly distributed about the axis 3. In its inoperative position as shown in Figure 5, the central plate 41 contacts the end 34 of the rod 33 without exerting any pressure thereon.

The actuator wheel 39 is normally kept in a resting position (Figure 5), in which both the steering wheel 5 and the actuator wheel 39 are coaxial with respect to one another and to the axes 3 and 40, by a plurality of springs 44, each of which is fitted on a corresponding pin 42 and is set between the plate 41 and the hub 43. The actuator wheel 39 is moreover able to move, against the thrust of the springs 44 and under a thrust that is asymmetrical with respect to the axis 3 exerted by the operator with just one hand, from its resting position (Figure 5) to an operative position (Figure 6), in which the axes 3 and 40 form an angle other than 0° with respect to one another.

During the displacement between its resting and operative positions, the wheel 39 co-operates with a cylindrical top plate 45. The plate 45 is slid over restricted top portions of the pins 42 and is clamped axially along the pins 42 by means of corresponding locknuts 46. As such, the top plate 45 forms a fixed thrust plate for the plate 41 when moved from its rest position.

With reference to Figure 6, when the actuator wheel 39 is moved by the operator into its operative position against the thrust of the springs 44, the plate 41 tilts and pushes onto the top portion 34 of the rod 33. As a result, the rod 33 is lowered, thereby pushing the elements 36 outwards to an extracted position under the thrust of the portion 35, and the cup 28 is raised towards an upward position against the thrust of the spring 30.

Conversely, with reference to Figure 5, when the wheel 39 is released by the operator, it is displaced into its resting position under the thrust of the springs 44. The cup 28 is set in its lowered position under the thrust of the spring 30, whereby the pins 36 are displaced towards their retracted position, and the rod 33 is raised so as to maintain the end 34 in contact with the plate 41.

Comparable to the first embodiment, a sensor 26 is operable to detect the changes in the position of the cup 28 to provide a signal to a control unit for selecting between "conventional steering" and "fast steering".

In connection with what has been described above, it should be pointed out that:
- due to the symmetrical design of the embodiments, the actuator wheels 18 and 39 can be displaced into their operative positions by means of a thrust exerted on any point of the wheels 18, 39, whether upwards (Figure 3), or downwards (Figure 6), avoiding the need for the operator to release, even with just one hand, the steering wheel 5;
- the steering ratio is switched to the value k1 when the cups 14, 28 are set in their lowered positions and the value k2 when the cups 14, 28 are set in their raised positions; and
- due to the simultaneous angular movement of the steering wheel 5 on the one hand and the respective actuator wheels 18, 39 on the other hand while steering, the operator is able to push or pull the wheels 18, 39 while continuing to steer with steering wheel 5 without any radial sliding movement of his hand over the actuator wheels 18, 39.

According to an alternative embodiment (not illustrated), the sensor 26 can be replaced by a sensor designed to detect a displacement of the cups 14, 28 along the axis 3, and a radio-wave transmission system comprising a receiving member fixed to the steering column 2 and an emitter member fixed to the steering wheel 5 and designed to transmit to the receiving member a signal coming from the sensor referred to above. In particular, the said emitter member may consist of a transponder.

## Claims

1. Steering equipment for a vehicle comprising a steering unit (1a), which in turn comprises a steering column (2) having a first given longitudinal axis (3), a transmission shaft (4) mounted inside the steering column (2) for rotating about said first axis (3), and a steering wheel (5) mounted on the transmission shaft (4) for controlling the steering of at least one wheel of a vehicle; hydraulic means (7) provided between the steering unit (1a) and the wheel; and a control device (8) acting on said hydraulic means (7) for varying a ratio between an angle of rotation of the steering wheel (5) about the first axis (3) and an angle of steering of the wheel; the control device (8) comprises a reference member (9; 27), which can move along said first axis (3), actuator means (18; 32) for displacing the reference member (9; 27) along the first axis (3), and sensor means (26) designed to detect a position of the reference member (9; 27) along the first axis (3); said sensor means (26) being mechanically disconnected from said reference member (9; 27); and
**characterized in that** said sensor means (26) comprise at least one proximity sensor mounted on the steering column (2) in a position substantially facing said reference member (9; 27).

2. The equipment according to claim 1, **characterized in that** said sensor means (26) comprise at least one sensor member operable to detect a displacement of the reference member (9; 27) along the first axis (3), and a radio-wave transmission system comprising a receiving member fixed to the steering column (2) and an emitter member fixed to the steering wheel (5) and designed to transmit to the receiving member a signal coming from said sensor member.

## Patentansprüche

1. Lenkausrüstung für ein Fahrzeug mit einer Steuereinheit (1a), die ihrerseits eine Lenksäule (2) einer ersten vorgegebenen Längsachse (3), eine Übertragungswelle (4), die im Inneren der Lenksäule (2) für eine Drehung um die erste Achse (3) befestigt ist, und ein Lenkrad (5) umfasst, dass auf der Übertragungswelle (4) zum Steuern der Lenkung von zumindest einem Rad eines Fahrzeuges befestigt ist; mit Hydraulikeinrichtungen (7), die zwischen der Lenkeinheit (1a) und dem Rad angeordnet sind; und mit einer Steuereinrichtung (8) die auf die Hydraulikeinrichtungen (7) einwirkt, um das Verhältnis zwischen einem Drehwinkel des Lenkrades (5) um die erste Achse (3) und einem Lenkwinkel des Rades zu ändern; wobei die Steuereinrichtung (8) ein Bezugselement (9; 27), das sich entlang der ersten Achse (3) bewegen kann, Betätigungseinrichtungen (18; 32) zum Verschieben des Bezugselementes (9; 27) entlang der ersten Achse (3) und Sensoreinrichtungen (26) umfasst, die zur Erfassung einer Position des Bezugselementes (9; 27) entlang der ersten Achse (3) ausgelegt sind, wobei die Sensoreinrichtungen (26) mechanisch von dem Bezugselement (9; 27) getrennt sind; und
**dadurch gekennzeichnet, dass** die Sensoreinrichtungen (26) zumindest einen Näherungs-Sensor umfassen, der auf der Lenksäule (2) in einer Position befestigt ist, die im Wesentlichen auf das Bezugselement (9; 27) gerichtet ist.

2. Ausrüstung nach Anspruch 1, **dadurch gekennzeichnet, dass** die Sensoreinrichtungen (26) zumindest ein Sensorelement, das zur Feststellung einer Verschiebung des Bezugselementes (9; 27) entlang der ersten Achse (3) betreibbar ist, und ein Funkwellen-Übertragungssystem umfassen, das ein an der Lenksäule (2) befestigtes Empfangselement und ein Sendeelement umfasst, das an dem Lenkrad (5) befestigt und so ausgelegt ist, dass es an Empfangselement ein Signal sendet, das von dem Sensorelement kommt.

## Revendications

1. Equipement de direction pour un véhicule comprenant un ensemble de direction (1 a), qui à son tour comprend une colonne de direction (2) ayant un premier axe longitudinal donné (3), un arbre de transmission (4) monté à l'intérieur de la colonne de direction (2) à rotation autour du dit premier axe (3), et un volant de direction (5) monté sur l'arbre de transmission (4) pour commander l'orientation d'au moins une roue d'un véhicule,
un dispositif hydraulique (7) pourvu entre l'ensemble de direction (1a) et la roue, et un dispositif de commande (8) agissant sur ledit dispositif hydraulique (7) pour faire varier un rapport entre un angle de rotation du volant de direction (5) autour du premier axe (3) et un angle d'orientation de la roue, le dispositif de commande (8) comprenant un élément de référence (9, 27), qui peut se déplacer le long du dit premier axe (3), un dispositif actionneur (18, 32) pour déplacer l'élément de référence (9, 27) le long du premier axe (3), et un dispositif détecteur (26) destiné à détecter une position de l'élément de référence (9, 27) le long du premier axe (3), ledit dispositif détecteur (26) étant déconnecté mécaniquement du dit élément de référence (9, 27), et
**caractérisé en ce que** ledit dispositif détecteur (26) comprend au moins un détecteur de proximité monté sur la colonne de direction (2) dans une position faisant face sensiblement au dit élément de référence (9, 27).

2. Equipement selon la revendication 1, **caractérisé en ce que** ledit dispositif détecteur (26) comprend au moins un élément détecteur pouvant fonctionner pour détecter un déplacement de l'élément de référence (9, 27) le long du premier axe (3), et un système de transmission par ondes radio comprenant un élément récepteur fixé à la colonne de direction (2) et un élément émetteur fixé au volant de direction (5) et destiné à transmettre à l'organe récepteur un signal venant du dit organe détecteur.
